# EUROPÄISCHE PATENTSCHRIFT

(11) **EP 1 088 840 B1**
(45) Veröffentlichungstag und Bekanntmachung des Hinweises auf die Patenterteilung: **15.12.2004**
(21) Anmeldenummer: 00119170.9
(22) Anmeldetag: 05.09.2000
(51) Int. Cl.: C08G 18/76, C08G 18/79, C08G 18/10, B01D 63/02, C08G 18/65

(54) **Transparente, heissdampfsterilisierbare, nicht zytotoxische Polyurethan-Vergussmassen, Verfahren zu ihrer Herstellung und ihre Verwendung, insbesondere für medizinisch-technische Artikel**
Clear, steam-sterilisable, non-cytotoxic polyurethane casting compostitions, process for their preparation and their use, especially for medical-technical articles
Masses à couler de polyuréthane transparente, stérilisables à la vapeur, non-cytotoxiques, leur procédé de préparation et leur utilisation, en particulier pour des articles médicaux

(30) Priorität: 01.10.1999 DE 19947190
(43) Veröffentlichungstag der Anmeldung: 04.04.2001
(73) Patentinhaber: BASF AKTIENGESELLSCHAFT, 67056 Ludwigshafen (DE)
(72) Erfinder: Horn, Peter, Dr., 69118 Heidelberg (DE); Scupin, Hansjoachim, 67069 Ludwigshafen (DE); Bartz, Thomas, Dr., 85259 Wiedenhausen (DE); Winkler, Jürgen, 01987 Schwarzheide (DE)

(56) Entgegenhaltungen:
- EP-A- 0 349 838
- EP-A- 0 361 675
- EP-A- 0 413 265
- EP-A- 0 538 673

## Beschreibung

Gegenstand der Erfindung sind transparente, heißdampfsterisisierbare, nicht zytotoxische Polyurethan-Vergußmassen, Verfahren zu ihrer Herstellung und ihre Verwendung, insbesondere für medizinisch-technische Artikel.

Polyurethan- im folgenden als PU bezeichnet, -Vergußmassen sind seit langem bekannt und vielfach in der Literatur beschrieben.
Die Verwendung von PU-Vergußmassen zur Herstellung von Formteilen für medizinisch-technische Geräte, insbesondere als Einbettwerkstoff für Hohlfasern in Dialysatoren, ist ebenfalls bekannt und beispielsweise in DE-OS 26 46 358, EP 0 305 387, EP 0 844 015 beschrieben. Durch die besondere Konstruktion der Dialysatoren, wie sie beispielsweise in EP 0 844 015 beschrieben wurden, ist es möglich geworden, den Volumenanteil der Hohlfasern im Dialysator um ca. 40 % zu steigern. Dies bleibt nicht ohne Konsequenzen auf die PU-Massen. Eine optimale Tränkung der Hohlfasern kann dadurch erreicht werden, daß die Viskosität der Einsatzkomponenten, insbesondere der Isocyanatkomponente, drastisch gesenkt wird.
Prinzipiell ist es auch möglich, die Viskosität der Polyolmischung zu senken, der so erzielte Effekt wäre jedoch wesentlich geringer. Für den Einsatz als Vergußmasse in Hohlfaserdialysatoren ist es weiterhin wesentlich, daß die PU-Masse kein toxisches Potential besitzt. Aufgrund ihrer einfachen Handhabung ist der Einsatz von PU-Vergußmassen für diesen Zweck besonders vorteilhaft.
Aus US-A-3,962,094 sind katalysatorfreie PU-Vergußmassen bekannt, die aus Rizinusöl-4,4'MDI-, Toluylendiisocyanat- oder Phenylendiisocyanat-Prepolymeren mit endständigen NCO-Gruppen und einem Vernetzungsmittel hergestellt werden.

In DE-A-2 749 491 (US-A-4,170,559) werden PU-Vergußmassen beschrieben, die durch Umsetzung eines Prepolymeren, bestehend aus Rizinusöl und Polyoxypropylenglykol sowie 4,4'MDI mit einem Vernetzungsmittel hergestellt werden.

In DE-A-3 048 529 (US-A-4,332,927) werden Zweikomponenten-PU-Systeme, die im ausgehärteten Zustand nicht zytotoxisch sind und sich für medizinische Trennvorrichtungen eignen, beschrieben.
Diese enthalten als Katalysator eine dicarboxylierte Dialkylzinnvebindung. Mit Zinn-Schwefel-Verbindungen katalysierte PU-Vergußmassen für Hohlfaserdialysatoren werden in DD-A-155 777 beschrieben. Die genannten PU-Vergußmassen können zu medizinischtechnischen Geräten oder Formteilen hierfür verarbeitet und vor ihrem Gebrauch mit Ethylenoxid und/oder mit Gammastrahlen sterilisiert werden. Diese Art der Sterilisierung ist jedoch nachteilig, da sowohl Reste von Ethylenoxid als auch Spaltprodukte der Behandlung mit Gammastrahlen bei den Patienten ein Gesundheitsrisiko bedeuten können. Ein weiterer Nachteil der beschriebenen Vergußmassen besteht darin, daß sie nicht mit jedem Fasertyp verarbeitet werden können. So können beispielsweise Cellulosefasern durch Rizinusöl enthaltende Vergußmassen geschädigt werden.

Physiologisch unbedenkliche PU-Formstoffe, insbesondere zum Einbetten von Hohlfasern in Dialysatoren, werden gemäß DD-A-251 565 hergestellt durch Umsetzung hochreaktiver, niedrigviskoser und lagerstabiler Mischprepolymerer, bestehend aus festen, hochreaktiven aromatischen Diisocyanaten und weniger reaktiven, flüssigen Diisocyanaten und Polyolen, mit Polyolen aus der Gruppe Rizinusöl und/oder dessen Umesterungsprodukten, hochreiner Polyester und Polyoxytetramethylenglykole. PU-Vergußmassen aus einem Isocyanatendgruppen aufweisenden PU-Prepolymeren und einer N,N,N',N'-Tetrakis(2-hydroxypropyl)ethylendiamin enthaltenden Polyolmischung sind Gegenstand von US-A-4 224 164. Nach Angaben der US-A-4 742 112 finden zur Herstellung von PU-Vergußmassen für elektrische Geräte als Polyolkomponente Mischungen aus 10 bis 60 Gew.-% eines Rizinolsäureesters und 90 bis 40 Gew.-% eines C₂bis C₆-Kohlenwasserstoffpolymeren mit mindestens einer Hydroxylgruppe Verwendung.

Bei der Verarbeitung der üblichen PU-Vergußmassensysteme treten außerdem vielfach Schwierigkeiten während des Produktionsablaufs auf. Die Vergußmassen lassen sich zwar unmittelbar nach dem Verguß und innerhalb eines Zeitraums von ungefähr 30 Minuten danach schneiden; sie härten jedoch sehr rasch nach, so daß die Formkörper, vorzugsweise Dialysefilter, bereits nach 24 Stunden nicht mehr geschnitten werden können. Dieses nachteilige Verhalten führt insbesondere bei Produktionsstörungen und an Arbeitsenden zu Produkteinbußen.

Ein weiterer Mangel der PU-Vergußmassen des Standes der Technik besteht auch darin, daß die Menge an Feinstaub, welcher beim Schneiden der Dialysatoren entsteht, hoch ist. Dies führt zu einem Verstopfen der Hohlfasern, welche zumeist aus mikroporösen Hohlfasern, wie Tetrasulfon, Polyethersulfon, thermostabilen Thermoplasten bestehen. Verstopfte Filter verhindern die Blutzufuhr und verhindern eine konstante Durchlaufgeschwindigkeit Blut/Dialyseflüssigkeit im Dialysator und sind daher zu vermeiden.

Finden zur Herstellung der PU-Vergußmassen PU-Formulierungen Verwendung, die als Aufbaukomponenten primäre, sekundäre und/oder tertiäre Aminogruppen und reaktive Wasserstoffatome gebunden enthalten, so sind die erhaltenen Vergußmassen instabil gegen eine Sterilisation mit Peressigsäure.

Zur Überwindung der genannten Nachteile werden in EP-A-393 545 transparente, heißdampfsterilisierbare, im wesentlichen kompakte PU-Vergußmassen beschrieben, die unter Verwendung von bei Raumtemperatur flüssigen, modifizierten Diphenylmethandiisocyanaten, die mit einem trifunktionellen Polyoxypropylenpolyol,modifiziert wurden, herstellbar sind. Gemäß EP-A-413 265 werden die modifizierten MDI erhalten durch Umsetzung einer Mischung aus 2,4'- und 4,4'-MDI mit speziellen, mindestens tetrafunktionellen Polyetherpolyolen. Die aus diesen Aufbaukomponenten hergestellten PU-Vergußmassen besitzen eine erhöhte Temperaturbeständigkeit und eine verbesserte Hydrolysebeständigkeit, es kann jedoch zu Haftungsproblemen zwischen den PU-Vergußmassen und den Gehäusematerialien des Dialysators, insbesondere beim Einsatz von Polycarbonaten, kommen.

Um diesen Mangel zu beheben, wurde in EP-A-538 673 vorgeschlagen, spezielle Polyetherpolyole zu verwenden, die einen Gehalt an Kaliumionen von 150 bis 1200 ppm aufweisen. Damit konnten die Haftungsprobleme zwar überwunden werden, nachteilig an den in EP-A-538 673 beschriebenen Vergußmassen ist jedoch, daß die Viskosität der verwendeten Isocyanatkomponente für viele Anwendungen zu hoch ist. Insbesondere bei Dialysatoren, die einen hohen Anteil an Hohlfasern enthalten, können dadurch Tränkschwierigkeiten auftreten. Dies führt zu einem erhöhten Ausschuß in der Produktion.

Aufgabe der Erfindung war es somit, heißdampfsterilisierbare, nicht cytotoxische Polyurethan-Vergußmassen entwickeln, die eine gute Verarbeitung, insbesondere eine gute Tränkung der Hohlfasern, ermöglichen, deren Einsatzkomponenten niederviskos sind und die sich nach dem Härten problemlos, insbesondere ohne Ausbildung von Feinstaub, schneiden lassen. Weiterhin sollte die Aufbaukomponenten der PU-Vergußmassen nur geringe Mengen, vorzugsweise kein Rizinusöl enthalten, da Rizinusöl in seiner Qualität schwankend und mitunter schwierig zu beschaffen ist.
Unter geringen Mengen werden hierbei Mengen von bis zu 4 Gew.-Teilen, bezogen auf das Gewicht der Polyurethan-Ausgangskomponenten, verstanden.

Die Aufgabe konnte überraschenderweise gelöst werden, indem die zur Herstellung der Vergußmassen eingesetzte Isocyanatkomponente eine Viskosität von maximal 1500 mPa.s bei 25°C, gemessen mit einem Haake-Viskosimeter VT 500, Typ 001-5583, Meßsystem MV 1, Hersteller Firma Haake, aufweist und deren Aufbaukomponenten mindestens eine organische Carbonsäure enthalten.

Gegenstand der Erfindung sind demzufolge transparente, heißdampfsterilisierbare, nicht zytotoxische Polyurethan-Vergußmassen, die herstellbar sind durch Umsetzung von
a) Polyisocyanaten mit
b) Verbindungen mit mindestens zwei mit Isocyanatgruppen reaktiven Wasserstoffatomen in Gegenwart von
c) Katalysatoren,
dadurch gekennzeichnet, daß die Polyisocyanate a) eine Viskosität von maximal 1500 mPa.s, gemessen mit einem Haake-Viskosimeter VT 500, aufweisen und die Umsetzung in Gegenwart von d) mindestens einer organischen Carbonsäure durchgeführt wird.

Als Polyisocyanate a), die eine Viskosität von maximal 1500 mPa.s aufweisen, kommt insbesondere Diphenylmethan-Diisocyanat zum Einsatz, das einen Gehalt an Uretonimin-Gruppen von vorzugsweise 10 bis 20 Gew.-% aufweist.

Neben dem Diphenylmethan-Diisocyanat, das einen Gehalt an Uretonimin-Gruppen von vorzugsweise 10 bis 20 Gew.-% aufweist, können bei dieser Ausführungsform des erfindungsgemäßen Verfahrens weitere Polyisocyanate zum Einsatz kommen.

Bevorzugt eingesetzt werden dabei 4,4'-MDI oder 2,4'-MDI oder Isomerenmischungen, die von 0 bis 5 Gew.-% 2,2*'*-MDI enthalten können. Geeignet ist auch 2,4 und/oder 2,6 Diisocyanatotoluol (TDI).Die genannten Isocyanate kommen zumeist in modifizierter Form zum Einsatz. Als modifizierte Polyisocyanate werden insbesondere Isocyanatgruppen enthaltende Umsetzungsprodukte der genannten Isocyanate mit mindestens einer Verbindung mit mindestens zwei mit Isocyanatgruppen reaktiven Wasserstoffatomen eingesetzt. Diese Verbindungen werden als Isocyanat-Prepolymere oder auch kurz als Prepolymere bezeichnet. Die Umsetzung der Isocyanate mit den Verbindungen mit mindestens zwei mit Isocyanatgruppen reaktiven Wasserstoffatomen kann dabei in Anwesenheit oder Abwesenheit der Uretonimin-Gruppen enthaltenden Diisocyanate erfolgen.

In einer besonderen Ausführungsform der Erfindung enthalten die Polyisocyanate a) keine Uretonimin-Gruppen enthaltenden Diisocyanate und bestehen nur aus Isocyanat-Prepolymeren. In diesem Fall erfolgt die Herstellung der Isocyanat-Prepolymeren durch Umsetzung von MDI mit speziellen Verbindungen mit mindestens zwei mit Isocyanatgruppen reaktiven Wasserstoffatomen, auf die weiter unten näher eingegangen wird.

Vorzugsweise weisen die Polyisocyanate a) einen NCO-Gehalt im Bereich von 20 bis 32 Gew.-% und eine Viskosität bei 25°C von 400 bis 1500 mPa.s, gemessen mit einem Haake-Viskosimeter VT 500, auf. Die genannten Kennwerte beziehen sich auf die Mischung aller zur Umsetzung verwendeten Polyisocyanate.

Bei dem erfindungsgemäß verwendeten Uretonimingruppen enthaltenden Diisocyanat handelt es sich vorzugsweise um ein Isocyanatgemisch, welches zu ca. 71 Gew.-% aus 4,4'-Diisocyanatodiphenylmethan besteht. Der Rest, bezogen auf 100 Gew.-% besteht aus Uretonimin. Der NCO-Gehalt des erfindungsgemäß eingesetzten Uretonimingruppen enthaltenden Diisocyanats beträgt vorzugsweise 29,3-29,7 Gew.-%. Die Viskosität bei 25°C beträgt 30 bis 45 mPa·s, gemessen mit einem Haake-Viskosimeter VT 500. Das erfindungsgemäß verwendete Uretonimingruppen enthaltende Isocyanat wird vorzugsweise hergestellt durch Umsetzung von 4,4'-MDI mittels eines Phospholen-Katalysators. Derartige Produkte werden beispielsweise von der BASF Aktiengesellschaft unter dem Handelsnamen Lypranat® MM 103 angeboten. Die Modifizierung von Isocyanaten durch Einbau und Bildung von Uretonimingruppen ist bekannt. Sie ist beispielsweise beschrieben im Kunststoff-Handbuch, Band 7, "Polyurethane", Carl-Hauser Verlag München, Wien, 3. Auflage, 1993, Seite 15.

Der Anteil der Uretonimingruppen enthaltenden Polyisocyanate an der Gesamtmenge an Polyisocyanaten a) beträgt vorzugsweise 1 bis 50 Gew.-%, besonders bevorzugt 1 bis 30 Gew.-% und insbesondere 1 bis 20 Gew.-%, jeweils bezogen auf das Gewicht der Polyisocyanate a).

Zu den Einsatzkomponenten zur Herstellung der PU-Vergußmassen sowie zu ihrer Herstellung ist im einzelnen folgendes zu sagen:
a) Auf die Uretonimingruppen enthaltenden Polyisocyanate wurde oben ausführlich eingegangen.
   Zu den in der Verfahrensvariante ohne Verwendung von Uretonimingruppen enthaltenden Polyisocyanaten sowie bevorzugt gemeinsam mit den Uretonimin enthaltenden Polyisocyanaten verwendeten modifizierten Polyisocyanaten ist folgendes zu sagen:
   Die Verfahrensvariante ohne Verwendung der Uretonmimin enthaltenden Polyisocyanate findet bevorzugt Anwendung, wenn Dialysatoren, wie sie beispielsweise in EP-A-844 015 beschrieben sind, verwendet werden.
   Als modifizierte MDI besonders bewährt haben sich in diesem Fall Urethangruppen gebunden enthaltende NCO-Prepolymere mit einem NCO-Gehalt von 24 bis 15 Gew.-%, vorzugsweise von 22 bis 17 Gew.-%, die hergestellt werden durch Umsetzung von, bezogen auf das Gesamtgewicht, mindestens 85 Gew.-%, vorzugsweise 90 bis 96 Gew.-% eines NCO-gruppenhaltigen Prepolymeren mit einem NCO-Gehalt von 29 bis 21 Gew.-%, vorzugsweise von 26 bis 22 Gew.-%, das seinerseits hergestellt wird durch Umsetzung von 4,4'-MDI mit Dipropylenglykol oder mindestens einem Polyoxypropylenglykol mit einer Hydroxyzahl bis 400 mgKOH/g, vorzugsweise von 50 bis 250 oder einer Mischung aus Dipropylenglykol und mindestens einem Polyoxypropylenglykol mit einer Hydroxyzahl bis 400 mgKOH/g mit maximal 5 Gew.-%, vorzugsweise 0,5 bis 4 Gew.-% Rizinusöl oder maximal 15 Gew.-% eines mit Glycerin, Trimethylolpropan gestarteten Polyoxyalkylen-polyols mit einer Hydroxylzahl von 90 bis 200 mgKOH/g und einem Alkaligehalt von kleiner als 10 ppm aus der Gruppe der Polyoxypropylen-, Polyoxypropylenpolyoxyethylen- und Polyoxyethylen-polyoxypropylen-polyole.
   Die unter Verwendung von Uretonimingruppen enthaltenden Polyisocyanaten hergestellten Polyisocyanate a) besitzen vorzugsweise Viskositäten von 70 bis 300 mPa.s bei 25°C. Die ohne Verwendung von Uretonimingruppen enthaltenden Polyisocyanaten hergestellten Polyisocyanate a) besitzen vorzugsweise eine Viskosität von 200 bis 1000 mPa.s bei 25°C, jeweils gemessen mit einem Haake-Viskosimeter VT 500. Die beschriebenen, ohne Verwendung von Uretonimingruppen enthaltenden Polyisocyanaten hergestellten Polyisocyanate a) werden wegen der zu ihrer Herstellung eingesetzten kurzkettigen Polyole auch Quasipräpolymere genannt. Sie können als Starter für höherviskose Prepolymere eingesetzt werden.
b) Als Verbindungen mit mindestens 2 mit Isocyanatgruppen reaktiven Wasserstoffatomen werden vorzugsweise Polyetherpolyole mit einer theoretischen Funktionalität von 2 bis 6 und einer Hydroxyzahl im Bereich von 140 bis 175, vorzugsweise von 150 bis 160 mgKOH/g verwendet. Derartige Polyole werden vorzugsweise nach bekannten Verfahren durch Umsetzung von H-funktionalen Startsubstanzen mit niederen Alkylenoxiden, insbesondere Ethylenoxid, Propylenoxid und/oder Butylenoxid, vorzugsweise Propylenoxid, hergestellt.

Insbesondere kommen solche Polyetherole zum Einsatz, bei denen als Startsubstanzen Diole, wie Ethylenglykol, Dipropylenglykol, Propandiol-1,2, oder höherfunktionelle Alkohole, wie Glycerin, Trimethylolpropan, Pentaerythrit oder Dipentaerythrit verwendet werden. Eine bevorzugt eingesetzte Startsubstanz zur Herstellung von Polyetheralkoholen, die für das erfindungsgemäße Verfahren einsetzbar sind, ist Pentaerythrit.
Die Startsubstanzen können einzeln oder im Gemisch untereinander zum Einsatz kommen. Im Gemisch mit den genannten Polyetherolen können auch andere Polyetherole eingesetzt werden. Hierbei kommen vorzugsweise 2- bis 6-funktionelle Polyetherole sowie hochfunktionelle Polyetheralkohole, wie sie insbesondere zur Herstellung von Polyurethan-Hartschaumstoffen eingesetzt werden, mit Hydroxylzahlen vorzugsweise im Bereich zwischen 20 und 500 mgKOH/g, in Betracht.

Als Katalysatoren zur Herstellung der Polyole, welche zur Herstellung der erfindungsgemäßen PU-Vergußmasse verwendet werden können, eignen sich insbesondere Kaliumhydroxid, Cäsiumhydroxid sowie die Multimetallcyanidverbindungen, sogenannte DMC-Katalysatoren. Letztere haben den Vorteil, daß bei ihrer Verwendung sehr hochmolekulare Polyetheralkohole mit einem geringen Gehalt an ungesättigten Bestandteilen hergestellt werden können. Die Reaktivität der Polyetheralkohole kann dadurch erhöht werden, daß bei Polyetheralkoholen, welche ganz oder überwiegend mit Propylenoxid hergestellt werden, am Kettenende noch bis zu 20 Gew.-% Ethylenoxid aufpfropft werden.

Bei allen für das erfindungsgemäße Verfahren eingesetzten Polyolen sollte jedoch aus toxischen Gründen der Einsatz von Bortrifluorid-Ether bzw. Bortrifluorid/Isopropanol als Katalysator vermieden werden.

Als besonders vorteilhaft hat sich der Einsatz eines Diols mit Dipropylenglykol als Starter erwiesen, an das Propylenoxid angelagert wurde. Die Hydroxylzahl des Diols liegt dabei vorzugsweise im Bereich von 50 bis 60 mgKOH/g. Die genannten Polyole werden in der Regel in der Komponente b) eingesetzt, sie können jedoch auch zur Herstellung des als Isocyanatkomponente a) verwendeten Prepolymers eingesetzt werden. Die Polyolkomponente enthält vorzugsweise als Hauptbestandteil ein Polyol mit einer theoretischen Funktionalität von 2 bis 6 und einer Hydroxyzahl von 150 bis 165 mgKOH/g. Die beste Haftung am Gehäusematerial des Dialysators wird mit Polyolen der Hydroxyzahl 150 bis 165 mgKOH/g erzielt. Dies gilt insbesondere für Dialysatoren, deren Gehäuse aus Polycarbonat auf Basis Bisphenol A besteht. Um die Temperaturbeständigkeit und die Haftung der Vergußmasse zu verbessern, ist ein Polyol auf Basis von Pentaerythrit und Propylenoxid mit einer Hydroxylzahl im Bereich zwischen 145 und 165 mg KOH/g bevorzugt. Die Haftung zu Polycarbonat wird nicht beeinträchtigt, wenn z.B. Polyole mit Hydroxylzahlen von größer 200 mgKOH/g eingesetzt werden, limitiert ist jedoch die Hydroxylzahl nach oben durch die Gefahr einer Kernverbrennung der PU-Vergußmasse.

Als Verbindungen mit mindestens zwei reaktiven Wasserstoffatomen b) werden weiterhin vorzugsweise auch Polyetherpolyole mit einem im Vergleich zu handelsüblichen Produkten sehr hohen Gehalt an Alkaliionen verwendet, die als Vernetzer wirken. Diese Produkte sind insbesondere Polyetherpolyole oder deren Mischungen mit einer mittleren Funktionalität von 3 bis 8, vorzugsweise von 3 bis 6, einer Hydroxyzahl von 200 bis 1000 mgKOH/g, vorzugsweise 230 bis 970 mgKOH/g, und einem Gehalt an Alkaliionen, vorzugsweise von Kaliumionen, von 50 bis 1200 ppm, vorzugsweise von 100 bis 1000 ppm und insbesondere von 400 bis 600 ppm.

Als Polyether-polyole mit Alkaliionengehalt von 50 bis 1200 ppm können die an sich bekannten Polyetheralkohole mit einer mittleren Funktionalität von 3 bis 8 und einer Hydroxyzahl von 200 bis 1000 verwendet werden mit der Maßgabe, daß die Polyetheralkohole direkt mit dem erforderlichen Alkaliionengehalt hergestellt werden oder vorzugsweise durch eine geeignete Methode der Alkaliionengehalt von handelsüblichen Polyetheralkoholen, die üblicherweise eine Alkaliionengehalt von kleiner 10 ppm besitzen, erhöht wird. Zu diesem Zwecke können die Polyetheralkohole mit wäßrigem Alkalihydroxid, vorzugsweise einer wäßrigen Kaliumhydroxidlösung, oder alkoholischen Alkalialkoholatlösungen, vorzugsweise alkoholischen Kaliumalkoholatlösungen, in den erforderlichen Mengen bei Raumtemperatur oder erhöhten Temperaturen, z.B. bei 20 bis 120°C behandelt werden. Danach wird das zugesetzte und gebildete Wasser bzw. der Alkohol bei einer Temperatur im Bereich von 70 bis 110°C, gegebenenfalls unter vermindertem Druck, z.B. von 0,01 bis 1 mbar, abdestilliert.

Als Polyetheralkohole mit erhöhten Gehalt an Alkaliionen bewährt haben sich z.B. mit Trimethylolpropan gestartete Polyoxyethylenpolyole mit einer Hydroxyzahl im Bereich von 632 bis 970 und einem Kaliumionengehalt im Bereich von 150 bis 600 ppm und mit Glycerin oder Trimethylolpropan oder einer Mischung aus Glycerin und Trimethylolpropan gestartete Polyoxypropylenpolyole mit einer Hydroxylzahl im Bereich von 210 bis 480 und einem Kaliumionengehalt im Bereich von 450 bis 600 ppm. Als alkalireiche Polyetheralkohole eignen sich ferner z.B. Polyoxypropylen-polyole mit einer mittleren Funktionalität von 4 bis 8, vorzugsweise von 4 bis 6 und einer Hydroxyzahl von 230 bis 500 mgKOH/g, vorzugsweise von 250 bis 380 mgKOH/g, die erhalten werden unter Verwendung von Sucrose oder vorzugsweise Sorbit oder Mischungen aus Sucrose und Sorbit als Startermoleküle, wobei als Costarter zusätzlich Wasser, Propylenglykol, Glycerin oder Mischungen aus mindestens zwei der genannten Costarter mitverwendet werden können, mit der Maßgabe, daß die Polyether-polyole einen Alkaliionengehalt, vorzugsweise Kaliumionengehalt, von 50 bis 1000 ppm, vorzugsweise 100 bis 700 ppm besitzen. In Betracht kommen ferner Polyoxypropylen- und/oder Polyoxyethylen-polyole mit einem Alkaliionengehalt von 150 bis 800 ppm und einer Hydroxyzahl von 450 bis 750, die erhalten werden können durch Umsetzung von Pentaerythrit oder einer Mischung aus Pentaerythrit und Glycerin und/oder Trimethylolpropan, zweckmäßigerweise in einem Molverhältnis von Pentaerythrit zu Glycerin und/oder Trimethylolpropan von 1:1, mit 1,2-Propylenoxid oder Ethylenoxid. Als alkalireiche Polyether-polyole verwendbar sind auch Polyoxypropylen-polyoxyethylen-polyole, die z.B. erhalten werden durch Polyaddition von 1,2-Propylenoxid und Ethylenoxid in einem Molverhältnis von 1:1 bis 1:8, vorzugsweise von 1:1 bis 1:3 an Glycerin, Trimethylolpropan oder eine Mischung aus Glycerin und Trimethylolpropan als Startermoleküle, mit einer Hydroxyzahl von 350 bis 950, vorzugsweise von 380 bis 600 und einem Alkaliionengehalt, vorzugsweise Kaliumionengehalt, von 50 bis 800 ppm, vorzugsweise von 100 bis 600 ppm, oder durch Polyaddition von 1,2-Propylenoxid und Ethylenoxid in einem Molverhältnis von 1:1 bis 1:8, vorzugsweise von 1:1 bis 1:3 an Sucrose oder vorzugsweise Sorbit oder Mischungen aus Sucrose und Sorbit als Startermoleküle, mit einer Hydroxyzahl von 200 bis 500, vorzugsweise von 230 bis 300 und einem Alkaliionengehalt, vorzugsweise Kaliumionengehalt von 50 bis 800 ppm, vorzugsweise von 100 bis 600 ppm. Die beispielhaft genannten Polyetherpolyole können einzeln oder in Form von Mischungen verwendet werden.

Die vorzugsweise verwendeten alkalireichen Polyetherpolyole besitzen eine Funktionalität von 2 bis 8 und vorzugsweise eine Hydroxylzahl von 50 bis 970 mgKOH/g, einen Alkaligehalt von 50 bis 1200 ppm. Derartige Polyetheralkohole werden beispielsweise in EP-A-538 673 beschrieben.
Die alkalireichen Polyetheralkohole gewährleisten eine rasche Durchhärtung der PU-Vergußmasse und führen somit zu einer Produktionssteigerung. Gleichzeitig verhindern sie eine unerwünschte Nachhärtung der PU-Vergußmassen, beispielsweise bei betriebsbedingten Abstellungen der Produktion.

Die alkalireichen Polyetheralkohole werden vorzugsweise in einer Menge von 2 bis 10 Gew.-%, bezogen auf das Gewicht der Komponente b), eingesetzt.

Zu den Verbindungen mit mindestens zwei mit Isocyanatgruppen reaktiven Wasserstoffatomen gehören auch die sogenannten Vernetzungsmittel, die zur Modifizierung der mechanischen Eigenschaften gegebenenfalls eingesetzt werden können. Sofern Vernetzungsmittel zur Modifizierung der mechanischen Eigenschaften umgesetzt werden, finden zweckmäßigerweise Hydroxylgruppen enthaltende Vernetzungsmittel mit einer Funktionalität von 3 bis 8, vorzugsweise 3 bis 4 Verwendung. Beispielhaft genannt seien 3- und mehrwertige Alkohole, wie z.B. Glycerin, Trimethylolpropan, Pentaerythrit, 2,2,6,6-Tetrahydroxymethyl-4-heptandiol-1,7(Di-pentaerythrit), Tripentaerythrit, Sorbit, Saccharose, Sorbitan und mit diesen Alkoholen gestartete niedermolekulare Polyoxypropylen-, Polyoxyethylen-, Polyoxypropylen-polyoxyethylen-polypolyole mit Molekulargewichten bis 600 g/mol, Sorbitantrioleat. Die genannten Vernetzer weisen zumeist Alkaligehalte von maximal 10 ppm auf.

Zusätzlich oder an Stelle der eingangs beschriebenen Polyetheralkohole können gegebenenfalls auch Polyesterole verwendet werden. Geeignete Polyesterole sind beispielsweise in EP-A-393 545, Spalte 5 und 6 beschrieben. Bevorzugt sind kurzkettige Polyesterole mit Hydroxylzahlen im Bereich von 150 bis 180 mgKOH/g. Geeignet sind auch Polyole, die sowohl Ether- als auch Estergruppen im Molekül enthalten.

Gegebenenfalls ist es erforderlich, insbesondere difunktionelle Kettenverlängerer einzusetzen. Die Kettenverlängerer können, falls erforderlich, sowohl mit den Verbindungen mit mindestens zwei mit Isocyanatgruppen reaktiven Wasserstoffatomen eingesetzt oder bei der Herstellung der Prepolymere eingesetzt werden. Beispielhaft für Kettenverlängerer seien genannt:

Niedermolekulare difunktionelle Alkohole, Ester- oder Ethergruppen als Brückenglieder gebunden enthaltende Glykole. Beispielhaft seien genannt: Alkandiole mit 2 bis 10 Kohlenstoffatomen, vorzugsweise 2 bis 6 Kohlenstoffatomen, wie z.B. Ethandiol, Propandiol-1,2 oder -1,3, 2,2-Dimethyl-propandiol, 1,2 Propandiol, Butandiol-1,4, -1,3 oder -2,3, Pentandiol-1,5 oder -2,5, Hexandiol-1,6, 2,2,5-Trimethyl- oder 2,2,5,5-Tetramethyl-hexandiol 1,6; Cycloalkandiole und Alkylcycloalkandiole mit 6 bis 19 Kohlenstoffatomen, vorzugsweise 6 bis 15 Kohlenstoffatomen, wie z.B. 1,4-Dihydroxycyclohexan. 1-Hydroxymethyl-4-hydroxycyclohexan, 1,4-Bis-(hydroxymethyl)-cyclohexan, 4,4'- Dihydroxy-dicyclohexyl-methan oder -propan-2,2, Esterbrücken gebunden enthaltende Glykole, wie z.B. 3-Hydroxy-2,2-dimethylpropionsäure-2-hydroxyethylester, Terephthalsäure,bis-ethylenglykol oder -butandiol-1,4 und Etherbrücken gebunden enthaltende Glykole mit Molekulargewichten bis 378 wie z.B. Hydroxyalkylenether des Hydrochinons, beispielsweise 1,4-Di-(β-hydroxyethyl)-hydrochinon, Oxyalkylen-glykol mit 4 bis 8 Kohlenstoffatomen, wie z.B. Diethylen-, Dipropylen-, Dibutylenglykol, Tripropylenglykol sowie die entsprechenden höhermolekularen Oligomeren davon, wie z.B. Dioxyethylen-, Trioxyethylen-, Dioxypropylen-, Trioxypropylen-, Dioxybutylen-, Trioxybutylen- oder Tetraoxybutylen-glykol. Die Dihydroxyverbindungen aus der Gruppe der Alkan-, Cycloalkan-, Alkylcycloalkyl-diole und der entsprechenden Ester- oder Etherbrücken gebunden enthaltenden Glykole können einzeln oder als Mischungen eingesetzt werden.

Die Kettenverlängerer können deshalb erforderlich sein, um insbesondere bei kälteren Außentemperaturen die Reaktion zum Anspringen zu bringen. Die Menge der Kettenverlängerer beträgt, bezogen auf das Gewicht der PU-Vergußmasse, 0,01 bis 10 Gew.-%.

Die Umsetzung der Polyisocyanate mit den Verbindungen mit mindestens zwei mit Isocyanatgruppen reaktiven Wasserstoffatomen erfolgt vorzugsweise in Anwesenheit von Urethanisierungskatalysatoren c). Entscheidend für ihren Einsatz ist, daß sie keine zytotoxische Wirkung haben. Geeignete Katalysatoren werden beispielsweise in EP-A-538 673 beschrieben. Ganz besonders gut geeignet ist eine Mischung aus Di-n-octylzinn-bis-(2-ethylhexylthioglykolat) und Mono-n-octyl-zinn-tris-(2-ethylhexylthioglykolat). n-Octyl-Gruppen aus Zinn sind im Gegensatz zu n-Butyl-Gruppen nicht toxisch.

Die erfindungsgemäß verwendeten organischen Carbonsäuren d) werden dem Reaktionsgemisch vorzugsweise in einer Menge von 0,01 bis 5 Gew.-Teilen, bezogen auf das Gewicht der PU-Vergußmasse, zugegeben. Die Zugabe der Carbonsäuren erfolgt vorzugsweise zu den Verbindungen mit mindestens zwei mit Isocyanatgruppen reaktiven Wasserstoffatomen b).

Als organische Carbonsäuren sind prinzipiell alle organischen Carbonsäuren, die nicht zytotoxisch wirken können, verwendbar.
Bevorzugt sind aliphatische und/oder aromatische Mono-/und Dicarbonsäuren. Besonders bevorzugt eingesetzt werden Fettsäuren.
Derartige Säuren sind im "Lehrbuch der organischen Chemie" Carl R. Noller, Springer-Verlag, Berlin, Göttingen, Heidelberg, Jahrgang 1960, Seiten 187 bis 188, beschrieben. Besonders bevorzugt eingesetzt werden Carbonsäuren, ausgewählt aus der Gruppe, enthaltend Benzoesäuren, Rizinolsäure, Ölsäure, Linolsäure und Linolensäure. Besonders vorteilhaft ist der Einsatz der genannten Säuren dann, wenn in der Polyolkomponente Polyetherole zum Einsatz kommen, welche einen Gehalt von Kaliumionen von ca. 50 bis 1500 ppm besitzen.

Die Toxizität der Einsatzprodukte und der PU-Vergußmassen wurde bestimmt Guideline ISO 7405 1997 (E), "Dentistry-Preclinical Evaluation of Biocompatibility of Medical Devices used in Dentistry-Test Methods", USP 23, "Biological Renetivity Tests, in vitro, Agar Diffusion Test", pp. 1967-1969, 1995, "Detection of the homolytic and Protein Denaturing Potential with HUMAN Erythrocytes (According to PAPE).

Die Erniedrigung der Viskosität der Isocyanatkomponente wirkte nicht nachteilig auf die Qualität der Vergußmasse aus. Überraschend war auch, daß die Vergußmassen keine Toxizität zeigen, daß sie heißdampfsterilisierbar sind, eine gute Haftung zu den als Gehäusematerialien der Dialysatoren verwendeten thermoplastischen Kunststoffe aufweisen, keine Wechselwirkung mit den mikroporösen Hohlfasern zeigen, und die PU-Vergußmasse rasch durchhärtet, so daß sie nach dem Verguß bereits nach 3 Stunden geschnitten werden kann. Außerdem härtet die PU-Masse nach Erreichen der Endhärte nicht weiter nach, so daß die Vergußmasse auch nach einer Lagerung, wie sie beispielsweise bei Betriebsstörungen oder zum Arbeitsende auftreten kann, problemlos geschnitten werden kann.

Ein wesentlicher Vorteil der Erfindung besteht auch darin, daß die Menge an Feinstaub, welcher beim Schneiden der Dialysatoren entsteht, außerordentlich gering ist. Dies ist vorteilhaft, um ein Verstopfen der Hohlfasern, welche aus mikroporösen Hohlfasern, wie Cuprophan, Tetrasulfon, Polyethersulfon, thermostabilen Thermoplasten bestehen, zu verhindern. Verstopfte Filter unterbrechen die Blutzufuhr und verhindern somit eine konstante Durchlaufgeschwindigkeit Blut/Dialyseflüssigkeit im Dialysator.

Die Erfindung soll an den nachstehenden Beispielen näher erläutert werden.

### Beispiele

### Beispiel 1

a) Herstellung des modifizierten Diphenylmethan-Diisocyanats
   70,13 Gew.-Teile eines modifizierten Diphenylmethan-diisocyanats mit einem NCO-Gehalt von 23,0 Gew.-% (Lupranat® MP102 der BASF Aktiengesellschaft), welches hergestellt wurde durch Umsetzung von 4,4'-MDI mit einer Mischung aus Dipropylenglykol und einem Polyoxypropylen-glykol mit einer Hydroxylzahl 250 und einem Kaliuminonengehalt von 3 ppm im Gewichtsverhältnis von 1 : 0,6 und
   22,75 Gew.-Teile eines durch Einbau von 30 Gew.-%, bezogen auf 4,4'-MDI, Uretonimingruppen modifizierten Diphenylmethandiisocyanats mit einem NCO-Gehalt von 29,5 Gew.-% (Lupranat® MP103 der BASF Aktiengesellschaft)
   wurden auf 60°C erwärmt. Unter Rühren wurden zu diesem Gemisch während 1 Stunde 7,12 Gew.-Teile eines Polyetherols mit einer Hydroxylzahl von 160 mg KOH/g, hergestellt durch Umsetzung von Trimethylolpropan und Propylenoxid, zugegeben. Nach beendeter Umsetzung wurde das Reaktionsgemisch auf Raumtemperatur abgekühlt. Das entstandene Prepolymer hatte eine Viskosität von 1150 mPa.s bei 25°C, gemessen mit einem Viscotester VT500, Typ 001-5583, Maßsystem SV1, Hersteller Firma Haake. Der NCO-Gehalt des Prepolymeren betrug 22,0 Gew.-%.
b) Herstellung der PU-Masse
   94,262 Gew.-Teile eines Polyetherols mit einer Hydroxylzahl von 153 mgKOH/g, hergestellt durch Umsetzung von Trimethylolpropan und Ethylenoxid, 0,2 Gew.-Teile Rizinolsäure, 0,038 Gew.-Teile eines Zinnkatalysators Tinstab® OTS 16 der Firma Akros Chemicals GmbH u. Co. KG und 5,50 Gew.-Teile eines Polyetherols mit einer Hydroxyzahl von 932 mgKOH/g und einem Alkaligehalt von 510 ppm Kalium, hergestellt durch Addition von Trimethylolpropan und Ethylenoxid, wurden zu einer Polyolkomponente vermischt.
   100 Gew.-Teile dieser Polyolkomponente wurden mit 70 Gew.-Teilen des modifizierten Diphenylmethan-Diisocyanats aus Beispiel 1a zur Umsetzung gebracht. Die Temperatur betrug ca. 25°C. Dabei entstand ein Formkörper. Das Reaktionssystem hatte eine Gelzeit von 292 Sekunden. Die PU-Masse hatte eine Shore A Härte von 97 und eine Shore D-Härte von 65. Die erhaltene Pu-Masse war vollkommen homogen. Der Feinstaub beim Schneiden des Formkörpers betrug 0,1 mg.

### Beispiel 2

a) Herstellung des modifizierten MDI

| | |
|---|---|
| 74,0 Gew.-% | 4,4'-Diisocyanatodiphenylmethan |
| 4,0 Gew.-% | Lupranat® MP103 der BASF Aktiengesellschaft |
| 14,5 Gew.-% | Lupranat® 1000 der BASF Aktiengesellschaft (Diol mit einer Hydroxylzahl von 55 mgKOH/g) |
| 2,5 Gew.-% | Tripropylenglykol |
| 5,0 Gew.-% | Dipropylenglykol |

Die beiden Isocyanate wurden auf 60°C unter Rühren erwärmt und die Polyolmischung innerhalb von 30 Minuten zugetropft. Nach beendeter Umsetzung wurde das Reaktionsgemisch auf Raumtemperatur abgekühlt. Das entstandene Prepolymer hatte eine Viskosität von 830 mPa.s bei 25°C, gemessen mit einem Viscotester VP 50, Typ 001-5583, Maßsystem SVD, Hersteller Firma Haake. Der NCO-Gehalt des Prepolymeren betrug 21,1 Gew.-%.
b) Herstellung der PU-Masse
Die Polyolkomponente bestand aus einer Mischung aus einem mit Pentaerythrit gestartetem Polyol, auf das Propylenoxid aufgepreßt wurde. Das Polyol hatte eine OH-Zahl von 157 mgKOH/g. Die Menge betrug 13,31 Gew.-Teile. Dazu wurde ein Polyol mit einer Hydroxyzahl von 932 mgKOH/g und einem Alkaligehalt von 510 ppm Kalium, hergestellt durch Addition von Trimethylolpropan und Ethylenoxid, in einer Menge von 6 Gew.-Teilen zugegeben. Anschließend wurden 0,6 Gew.-Teile Ölsäure und 0,09 Gew.-Teile Zinnkatalysator Tinstab® OTS 16 der Firma. Akros Chemicals GmbH u. Co.KG eingerührt und die genannten Komponenten zu einer Polyolkomponente vermischt.
100 Gew.-Teile dieser Polyolkomponente wurden mit 75,5 Gew.-Teilen des modifizierten Diphenylmethandiisocyanats aus Beispiel 2a zur Umsetzung gebracht. Die Temperatur betrug ca. 25°C. Das Reaktionssystem hatte eine Gelzeit von 350 Sekunden. Die PU-Masse hatte eine Shore A Härte von 97,5 und eine Shore D Härte von 65. Die erhaltene PU-Masse war vollkommen transparent und homogen. Der Feinstaub beim Schneiden des Formkörpers betrug 0,1 mg.

### Beispiel 3

a) modifizierte MDI gemäß Beispiel 2a
b) Herstellung der PU-Masse

Die Polyolkomponente bestand aus einer Mischung aus 94,31 Gew.-Teilen eines Polyetherpolyols aus Pentaerythrit und Propylenoxid mit einer Hydroxylzahl von 157 mg KOH/g und 3 Gew.-Teilen eines Polyetherpolyols mit einer Hydroxyzahl von 932 mgKOH/g mit einem Alkaligehalt von 510 ppm Kalium, hergestellt durch Addition von Ethylenoxid an Trimethylolpropan. Anschließend wurden 0,6 Gew.-Teile Ölsäure, 2 Gew.-Teile Ethylenglykol sowie 0,09 Gew.-Teile des Katalysators Tinstab® OTS16 zugegeben.

100 Gew.-Teile dieser Polyolkomponente wurden mit 79.1 Gew.-Teilen des modifizierten Diphenylmethandiisocyanats aus Beispiel 2a zur Umsetzung gebracht. Die Temperatur betrug ca. 25°C. Das Reaktionssystem hatte eine Gelzeit von 370 Sekunden. Die PU-Masse hatte eine Shore A Härte von 97,5 und eine Shore D Härte von 66. Die erhaltene PU-Masse war vollkommen transparent und homogen. Der Feinstaub beim Schneiden des Formkörpers betrug 0,1 mg.

## Patentansprüche

1. Verfahren zur Herstellung von transparenten, heißdampfsterilisierbaren, nicht zytotoxischen Polyurethan-Vergußmassen, herstellbar durch Umsetzung von
a) Polyisocyanaten mit
b) Verbindungen mit mindestens zwei mit Isocyanatgruppen reaktiven Wasserstoffatomen in Gegenwart von
c) Katalysatoren
**dadurch gekennzeichnet, daß** die Polyisocyanate a) eine Viskosität von maximal 1500 mPa.s, gemessen mit einem Haake-Viskosimeter VT 500 bei 25°C, aufweisen und die Umsetzung in Gegenwart von d) mindestens einer organischen Carbonsäure durchgeführt wird.

2. Verfahren nach Anspruch 1, **dadurch gekennzeichnet, daß** als Polyisocyanate a) solche verwendet werden, die mindestens ein Diphenylmethan-Diisocyanat enthalten, das einen Gehalt an Uretonimin-Gruppen von 10 bis 20 Gew.-% aufweist.

3. Verfahren nach Anspruch 1, **dadurch gekennzeichnet, daß** das Diphenylmethan-Diisocyanat, das einen Gehalt an Uretonimin-Gruppen von 10 bis 20 Gew.-% aufweist, in einer Menge von 1 bis 50 Gew.-%, bezogen auf das Gewicht der Polyisocyanate a), eingesetzt wird.

4. Verfahren nach Anspruch 1, **dadurch gekennzeichnet, daß** das Diphenylmethan-Diisocyanat, das einen Gehalt an Uretonimin-Gruppen von 10 bis 20 Gew.-% aufweist, in einer Menge von 1 bis 30 Gew.-%, bezogen auf das Gewicht der Polyisocyanate a), eingesetzt wird.

5. Verfahren nach Anspruch 1, **dadurch gekennzeichnet, daß** das Diphenylmethan-Diisocyanat, das einen Gehalt an Uretonimin-Gruppen von 10 bis 20 Gew.-% aufweist, in einer Menge von 1 bis 20 Gew.-%, bezogen auf das Gewicht der Polyisocyanate a), eingesetzt wird.

6. Verfahren nach Anspruch 1, **dadurch gekennzeichnet, daß** als Polyisocyanate a) Prepolymere aus der Umsetzung von Polyisocyanaten mit mindestens einer Verbindung mit mindestens zwei mit Isocyanatgruppen reaktiven Wasserstoffatomen eingesetzt werden.

7. Verfahren nach Anspruch 1, **dadurch gekennzeichnet, daß** als Polyisocyanate a) Mischungen aus Diphenylmethan-Diisocyanat, das einen Gehalt an Uretonimin-Gruppen von 10 bis 20 Gew.-% aufweist, und Prepolymere aus der Umsetzung von Polyisocyanaten mit mindestens einer Verbindung mit mindestens zwei mit Isocyanatgruppen reaktiven Wasserstoffatomen eingesetzt werden.

8. Verfahren nach Anspruch 1, **dadurch gekennzeichnet, daß** die Polyisocyanate a) zusammen einen NCO-Gehalt im Bereich von 20 bis 32 Gew.-% aufweisen.

9. Verfahren nach Anspruch 1, **dadurch gekennzeichnet, daß** als organischen Carbonsäuren aromatische Mono-/und Dicarbonsäuren eingesetzt werden.

10. Verfahren nach Anspruch 1, **dadurch gekennzeichnet, daß** die organischen Carbonsäuren ausgewählt sind aus der Gruppe, enthaltend Benzoesäuren, Rizinolsäure, Ölsäure, Linolsäure und Linolensäure.

11. Verfahren nach Anspruch 1, **dadurch gekennzeichnet, daß** die organischen Carbonsäuren in einer Menge von 0,01 bis 5 Gew.-Teilen, bezogen auf das Gewicht der PU-Vergußmasse, eingesetzt werden.

12. Verfahren nach Anspruch 1, **dadurch gekennzeichnet, daß** als Verbindungen mit mindestens zwei mit Isocyanatgruppen reaktiven Wasserstoffatomen Polyetherpolyole mit einer theoretischen Funktionalität von 2 bis 6 und einer Hydroxyzahl im Bereich von 140 bis 175 mgKOH/g eingesetzt werden.

13. Verfahren nach Anspruch 1, **dadurch gekennzeichnet, daß** die Verbindungen mit mindestens zwei mit Isocyanatgruppen reaktiven Wasserstoffatomen mindestens einen Polyetheralkohol enthalten der einen Gehalt an Alkalimetallionen im Bereich von 50 bis 1200 ppm aufweist.

14. Polyurethan-Vergußmassen, herstellbar nach einem der Ansprüche 1 bis 12.

15. Verwendung von Polyurethan-Vergußmassen, herstellbar nach Anspruch 13, für die Herstellung von medizinisch-technische Artikeln.

16. Verwendung von Polyurethan-Vergußmassen, herstellbar nach Anspruch 13, für die Herstellung von Hohlfaser-Dialysatoren.

## Claims

1. A process for preparing transparent, non-cytotoxic polyurethane embedding compositions which can be sterilized using superheated steam and can be prepared by reacting
a) polyisocyanates with
b) compounds having at least two hydrogen atoms reactive toward isocyanate groups, in the presence of
c) catalysts
which comprises using polyisocyanates a) which have a viscosity of not more than 1500 mPa.s, measured at 25°C using a Haake VT 500 viscometer, and carrying out the reaction in the presence of d) at least one organic carboxylic acid.

2. A process as claimed in claim 1, wherein the polyisocyanate, a) to be used comprise at least one diphenylmethane diisocyanate which has a content of 10 to 20% by weight of uretonimine groups.

3. A process as claimed in claim 1, wherein the amount used of the diphenylmethane diisocyanate which has a content of from 10 to 20% by weight of uretonimine groups is from 1 to 50% by weight, based on the weight of the polyisocyanates a).

4. A process as claimed in claim 1, wherein the amount used of the diphenylmethane diisocyanate which has a content of from 10 to 20% by weight of uretonimine groups is from 1 to 30% by weight, based on the weight of the polyisocyanates a).

5. A process as claimed in claim 1, wherein the amount used of the diphenylmethane diisocyanate, which has a content of from 10 to 20% by weight of uretonimine groups, is from 1 to 20% by weight, based on the weight of the polyisocyanates a).

6. A process as claimed in claim 1, wherein the polyisocyanates a) used comprise prepolymers from the reaction of polyisocyanates with at least one compound having at least two hydrogen atoms reactive toward isocyanate groups.

7. A process as claimed in claim 1, wherein the polyisocyanates a) used comprise mixtures made from diphenylmethane diisocyanate which has a content of from 10 to 20% by weight of uretonimine groups and prepolymers from the reaction of polyisocyanates with at least one compound having at least two hydrogen atoms reactive toward isocyanate groups.

8. A process as claimed in claim 1, wherein the polyisocyanates a) taken together have an NCO content of from 20 to 32% by weight.

9. A process as claimed in claim 1, wherein the organic carboxylic acids used comprise aromatic mono- and dicarboxylic acids.

10. A process as claimed in claim 1, wherein the organic carboxylic acids have been selected from the group comprising benzoic acids, ricinoleic acid, oleic acid, linoleic acid and linolenic acid.

11. A process as claimed in claim 1, wherein the amount used of the organic carboxylic acids is from 0.01 to 5 parts by weight, based on the weight of the PU embedding composition.

12. A process as claimed in claim 1, wherein the compounds used having at least two hydrogen atoms reactive toward isocyanate groups are polyether polyols with a theoretical functionality of from 2 to 6 and with a hydroxyl number of from 140 to 175 mg KOH/g.

13. A process as claimed in claim 1, wherein the compounds having at least two hydrogen atoms reactive toward isocyanate groups comprise at least one polyether alcohol which has an alkali-metal-ion content of from 50 to 1200 ppm.

14. A polyurethane embedding composition which can be prepared as claimed in any one of claims 1 to 12.

15. The use of polyurethane embedding compositions which can be prepared as claimed in claim 13, for producing products for medical engineering.

16. The use of polyurethane embedding compositions which can be prepared as claimed in claim 13, for producing hollow-fiber dialyzers.

## Revendications

1. Procédé pour la préparation de masses de scellement transparentes à base de polyuréthane, non cytotoxiques, stérilisables à la vapeur surchauffée, que l'on peut préparer par mise en réaction de
a) des polyisocyanates avec
b) des composés comprenant au moins deux atomes d'hydrogène réactifs avec des groupes isocyanates, en présence de
c) des catalyseurs
**caractérisé en ce que** les polyisocyanates a) présentent une viscosité maximale de 1500 mPa.s, mesurée avec un viscosimètre VT 500 de Haake à une température de 25 °C, et on effectue la mise en réaction en présence de d) au moins un acide carboxylique organique.

2. Procédé selon la revendication 1, **caractérisé en ce qu'**on utilise, à titre de polyisocyanates a) ceux qui contiennent au moins un diphénylméthane-diisocyanate qui présentent une teneur en groupes urétonimine de 10 à 20 % en poids.

3. Procédé selon la revendication 1, **caractérisé en ce qu'**on met en oeuvre le diphénylméthane-diisocyanate, qui présente une teneur en groupes urétonimine de 10 à 20 % en poids, en une quantité de 1 à 50 % en poids rapportés au poids des polyisocyanates a).

4. Procédé selon la revendication 1, **caractérisé en ce qu'**on met en oeuvre le diphénylméthane-diisocyanate, qui présente une teneur en groupes urétonimine de 10 à 20 % en poids, en une quantité de 1 à 30 % en poids rapportés au poids des polyisocyanates a).

5. Procédé selon la revendication 1, **caractérisé en ce qu'**on met en oeuvre le diphénylméthane-diisocyanate, qui présente une teneur en groupes urétonimine de 10 à 20 % en poids, en une quantité de 1 à 20 % en poids rapportés au poids des polyisocyanates a).

6. Procédé selon la revendication 1, **caractérisé en ce qu'**on met en oeuvre, à titre de polyisocyanates a), des prépolymères que l'on obtient par la mise en réaction de polyisocyanates avec au moins un composé comprenant au moins deux atomes d'hydrogène réactifs avec des groupes isocyanates.

7. Procédé selon la revendication 1, **caractérisé en ce qu'**on met en oeuvre, à titre de polyisocyanates a), des mélanges d'un diphénylméthane-diisocyanate qui présente une teneur en groupes urétonimine de 10 à 20 % en poids et de prépolymères que l'on obtient par la mise en réaction de polyisocyanates avec au moins un composé comprenant au moins deux atomes d'hydrogène réactifs avec des groupes isocyanates.

8. Procédé selon la revendication 1, **caractérisé en ce que** les polyisocyanates a) présentent ensemble une teneur en groupes NCO dans la plage de 20 à 32 % en poids.

9. Procédé selon la revendication 1, **caractérisé en ce qu'**on met en oeuvre, à titre d'acides carboxyliques organiques, des acides monocarboxyliques et dicarboxyliques aromatiques.

10. Procédé selon la revendication 1, **caractérisé en ce que** les acides carboxyliques organiques sont choisis parmi le groupe comprenant des acides benzoïques, l'acide ricinique, l'acide oléique, l'acide linoléique et l'acide linolénique.

11. Procédé selon la revendication 1, **caractérisé en ce qu'**on met en oeuvre les acides carboxyliques organiques en une quantité de 0,01 à 5 parties en poids, rapportés au poids des masses de scellement de type PU.

12. Procédé selon la revendication 1, **caractérisé en ce qu'**on met en oeuvre, à titre de composés comprenant au moins deux atomes d'hydrogène réactifs avec des groupes isocyanates, des polyétherpolyols possédant une fonctionnalité théorique de 2 à 6 et un indice d'hydroxyle dans la plage de 140 à 175 mg de KOH/g.

13. Procédé selon la revendication 1, **caractérisé en ce que** les composés comprenant au moins deux atomes d'hydrogène réactifs avec des groupes isocyanates contiennent au moins un polyétheralcool qui présente une teneur en ions de métaux alcalins dans la plage de 50 à 1200 ppm.

14. Masses de scellement à base de polyuréthane, que l'on peut préparer conformément à l'une quelconque des revendications 1 à 12.

15. Utilisation de masses de scellement à base de polyuréthane, que l'on peut préparer conformément à la revendication 13, pour la fabrication d'articles médicaux techniques.

16. Utilisation de masses de scellement à base de polyuréthane, que l'on peut préparer conformément à la revendication 13, pour la fabrication de dialyseurs du type à fibres creuses.
